(19) Europäisches Patentamt
European Patent Office
Office européen des brevets

(11) **EP 0 975 942 B1**

(12) **EUROPÄISCHE PATENTSCHRIFT**

(45) Veröffentlichungstag und Bekanntmachung des Hinweises auf die Patenterteilung:
**27.03.2002 Patentblatt 2002/13**

(51) Int Cl.⁷: **G01L 27/00**

(21) Anmeldenummer: **98959735.6**

(22) Anmeldetag: **16.10.1998**

(86) Internationale Anmeldenummer:
**PCT/DE98/03041**

(87) Internationale Veröffentlichungsnummer:
**WO 99/34187 (08.07.1999 Gazette 1999/27)**

(54) **VERFAHREN UND VORRICHTUNG ZUR FUNKTIONSÜBERWACHUNG EINES DRUCKSENSORS**

METHOD AND DEVICE FOR MONITORING THE OPERATION OF A PRESSURE SENSOR

PROCEDE ET DISPOSITIF POUR LA SURVEILLANCE DU FONCTIONNEMENT D'UN CAPTEUR DE PRESSION

(84) Benannte Vertragsstaaten:
**DE FR GB**

(30) Priorität: **23.12.1997 DE 19757655**

(43) Veröffentlichungstag der Anmeldung:
**02.02.2000 Patentblatt 2000/05**

(73) Patentinhaber: **SIEMENS AKTIENGESELLSCHAFT**
**80333 München (DE)**

(72) Erfinder:
• **HARTKE, Andreas**
  **D-80807 München (DE)**
• **BIRKNER, Christian**
  **D-93173 Irlbach (DE)**

(56) Entgegenhaltungen:
**DE-A- 3 226 849          DE-A- 4 408 588**
**DE-A- 19 513 158          DE-C- 4 131 401**

## Beschreibung

Die Erfindung betrifft ein Verfahren und eine Vorrichtung zur Funktionsüberwachung eines Drucksensors, der den Druck in einem über ein Druckstellglied geregelten Druckspeicher, insbesondere einem Hochdruckspeicher für ein Kraftstoffversorgungssystem, einstellt.

Hochdruckspeicher werden in Kraftstoffversorgungssystemen vor allem bei Einspritzsystemen für Brennkraftmaschinen eingesetzt, bei denen mit sehr hohen Einspritzdrücken gearbeitet wird. Solche Einspritzsysteme, die bei Dieselmotoren unter der Bezeichnung Common-Rail-Systeme bekannt sind, bieten in bezug auf Flexibilität und Kosten deutliche Vorteile gegenüber konventionellen Einspritzsystemen. Bei diesen Einspritzsystemen wird mittels einer Hochdruckpumpe Kraftstoff aus einem Kraftstoffvorratsbehälter in den Druckspeicher gefördert, über den der Kraftstoff dann an Einspritzventilen, die in den Zylinderköpfen des Motors angeordnet sind, ansteht. Die Einspritzvorgänge in die Zylinder werden durch Bestromen der Einspritzventile ausgelöst, wobei das Einspritzvolumen abhängig von dem an den Einspritzventilen anstehenden Druck und der Dauer der Bestromung ist.

Die Druckregelung im Druckspeicher erfolgt dabei über ein Druckstellglied, das über eine elektronische Motorsteuereinheit eingestellt wird. Diese Motorsteuereinheit erfaßt weiterhin über einen mit dem Druckspeicher verbundenen Sensor die Druckhöhe, um das Druckstellglied richtig einregeln zu können. Dem Drucksensor kommt deshalb auch eine wesentliche Funktion beim Einstellen des Drucks im Druckspeicher zu. Ein Funktionsfehler des Drucksensors kann aufgrund des sich daraus ergebenden Fehlers bei der Druckregelung im Druckspeicher zu einer Beeinträchtigung des Einspritzverhaltens und damit der Verbrennungscharakteristik führen, was wiederum eine erhöhte Schadstoffemission nach sich ziehen kann.

Im Stand der Technik sind zwar bereits Drucksensoren bekannt, die mit einer Funktionsüberwachungseinrichtung und zusätzlichen Meßwertaufnehmern ausgestattet sind. Diese zusätzlichen Meßwertaufnehmer führen jedoch zu einer wesentlichen Kostensteigerung bei der Sensorfertigung. Weiterhin müssen solche Funktionsüberwachungseinrichtungen auch an die jeweiligen Gegebenheiten in der Brennkraftmaschine konstruktiv angepaßt werden, was zusätzliche Kosten verursacht.

Aus der DE 195 13 158 A1 ist ein Verfahren zur Erkennung eines Lecks in einem Kraftstoffversorgungssystem bekannt, bei dem der Gradient des Kraftstoffdrucks nach dem Abschalten der Kraftstoffpumpe im System ausgewertet wird und eine Fehlererkennung erfolgt, falls der Abbau des Überdrucks in einem Teil des Kraftstoffversorgungssystem schneller erfolgt als erwartet wird. In der DE 41 31 401 C1 ist weiterhin die Möglichkeit einer Überwachung von Drucksensoren in einem medizinischen Operationssystem dargestellt, bei dem Schwankungsbreite der von den zu überwachenden Drucksensoren gelieferten Drucksignale für einen bestimmten Betriebsdruck mit einer Sollschwankungsbreite verglichen wird, um Fehler festzustellen.

Aus der DE 32 26 849 A1 ist eine Vorrichtung zum Überwachen eines Drucksensors bekannt, der stromabwärts hinter der Drosselklappe im Saugrohr einer Brennkraftmaschine angeordnet ist. Dabei wird bei geschlossener Drosselklappe von einem Drosselklappenschalter ein logisches Signal erzeugt. Eine Überwachung des Drucksensors wird dadurch bewirkt, dass bei gleichzeitigem Auftreten des logischen Signals und eines bei geschlossener Drosselklappe physikalisch unmöglichen Drucksignales Alarmmittel ausgelöst werden.

Aufgabe der vorliegenden Erfindung ist es deshalb, ein Verfahren und eine Vorrichtung zur Funktionsüberwachung eines Drucksensors, der den Druck in einem über ein Druckstellglied geregelten Druckspeicher aufnimmt, bereitzustellen, die ohne zusätzliche Meßwertaufnehmer in einfacher und zuverlässiger Weise die Funktionsfähigkeit des Drucksensors überprüfen.

Diese Aufgabe wird durch ein Verfahren gemäß Anspruch 1 und eine Vorrichtung gemäß Anspruch 6 gelöst. Gemäß der Erfindung wird der in einem Druckspeicher zu einem bestimmten Zeitpunkt zu erwartende Druckwert auf der Grundlage eines bei einem Druckstellglied vorgegebenen Haltedrucks und einer erfaßten Änderungsrate in der Massenbilanz eines in dem Druckspeicher enthaltenen Mediums berechnet und dieser berechnete Druckwert mit dem von einem Drucksensor zu dem bestimmten Zeitpunkt aufgenommenen Druckwert verglichen, um bei einer Abweichung über eine vorbestimmte Differenz hinaus einen Funktionsfehler im Drucksensor festzustellen. Das erfindungsgemäße Verfahren ermöglicht mit Hilfe eines einfachen Modells und somit eines geringen Datenverarbeitungsaufwandes eine zuverlässige Funktionsanalyse des Drucksensors durchzuführen und auf diese Weise sowohl langsame Fehlerprozesse wie einen Sensordrift als auch ein plötzliches Sensorversagen zu erkennen. Zur Funktionsdiagnose des Drucksensors werden weiterhin über die bereits herkömmlicherweise in Einspritzsystemen erfaßten Meßdaten hinaus keine zusätzlichen Daten benötigt. Die erfindungsgemäße Vorrichtung zeichnet sich deshalb durch einen geringen Schaltungsaufwand unter Verzicht auf zusätzliche kostspielige Meßwertaufnehmer aus und läßt sich auch auf einfache Weise in die Steuerung einer Brennkraftmaschine integrieren.

Bevorzugte Ausführungsformen der Erfindung sind in den abhängigen Ansprüchen angegeben.

Die Erfindung wird anhand der Figuren näher erläutert. Es zeigen

**Figur 1** eine schematische Darstellung eines Kraftstoffeinspritzsystems;

**Figur 2** einen Grundaufbau eines erfindungsgemäßen Funktionsüberwachungssystems für einen Drucksensor in einem Kraftstoffeinspritzsystem gemäß Figur 1;

**Figur 3** eine Ausführungsform des Funktionsüberwachungssystems gemäß Figur 2;

**Figur 4** Kennlinien eines Druckregelventils für unterschiedliche Drehzahlen der Brennkraftmaschine; und

**Figur 5** Kennlinien eines Druckregelventils für unterschiedliche Temperaturen in der Brennkraftmaschine.

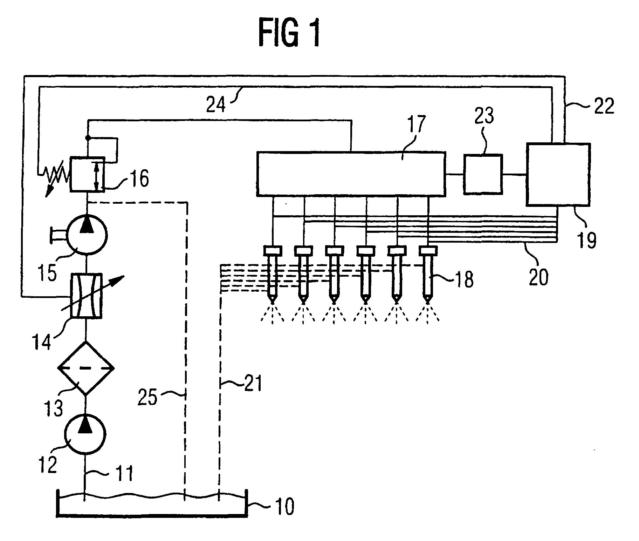

Figur 1 zeigt schematisch den Aufbau eines Kraftstoffeinspritzsystems, wie es unter der Bezeichnung Common-Rail-System vor allem bei Dieselmotoren eingesetzt wird. Bei diesem Einspritzsystem wird Kraftstoff aus einem Kraftstoffvorratsbehälter 10 über eine Kraftstoffleitung 11 durch eine Vorförderpumpe 12 angesaugt. Die Vorförderpumpe 12 fördert den Kraftstoff über ein Kraftstoffilter 13 zu einer Hochdruckpumpe 15, die den Kraftstoff verdichtet und unter hohem Druck in einen Druckspeicher 17 einspeist. Der Druckspeicher 17 steht mit Einspritzventilen 18 in Verbindung, über die der Kraftstoff in die Zylinder der Brennkraftmaschine (nicht gezeigt) eingespritzt wird. Der Einspritzvorgang wird durch eine elektronische Steuereinheit 19 ausgelöst, die über Signalleitungen 20 mit den Einspritzventilen 18 verbunden ist. Der in den Einspritzventilen 18 auftretende Leckage-Kraftstoffstrom wird über Kraftstoffleitungen 21 in den Kraftstoffvorratsbehälter 10 zurückgeführt.

Um den Volumenstrom der Hochdruckpumpe 15 entsprechend den jeweiligen Betriebsbedingungen der Brennkraftmaschine bedarfsabhängig einstellen zu können, ist in der Kraftstoffleitung 11 zwischen der Vorförderpumpe 12 und der Hochdruckpumpe 15 ein zusätzliches Saugdrosselventil 14 angeordnet, mit dessen Hilfe der Förderstrom der Hochdruckpumpe geregelt werden kann. Dieses Saugdrosselventil 14 wird von der Steuereinheit 19 über eine Steuerleitung 22 angesprochen. Alternativ kann der Förderstrom der Hochdruckpumpe 15 jedoch auch über ein variables Übersetzungsgetriebe für den Antrieb der Hochdruckpumpe oder durch eine druck- oder/und drehzahlgeregelte Auslegung der Vorförderpumpe 12 beeinflußt werden.

Um den Druck in dem Druckspeicher 17 entsprechend den gewünschten Betriebsbedingungen der Brennkraftmaschine einstellen zu können, ist weiterhin zwischen die Hochdruckpumpe 15 und den Druckspeicher 17 ein Druckregelventil 16 in die Kraftstoffleitung 11 geschaltet. Dieses Druckregelventil 15 steuert über eine Kraftstoffleitung 25 überschüssigen Kraftstoff, der nicht zur Aufrechterhaltung eines im Druckspeicher 17 gewünschten Drucks benötigt wird, in den Kraftstoffvorratsbehälter 10 ab. Das Druckregelventil 16 weist ein Stellglied auf, das eine Einlaßöffnung im Druckregelventil mit einem vorgegebenen Haltedruck verschließt, wobei der Haltedruck von der Steuereinheit 19 über eine Steuerleitung 24 entsprechend dem im Druckspeicher 17 gewünschten Druck eingestellt wird. Die Steuereinheit 19 gibt hierfür über die Steuerleitung 24 ein pulsweiten-moduliertes Ansteuersignal an das Druckregelventil 16 ab, wobei ein Tastverhältnis dieses pulsweiten-modulierten Ansteuersignals den Haltedruck des Stellglieds vorgibt.

Zur Druckregelung im Druckspeicher 17 weist das in Figur 1 gezeigte Kraftstoffeinspritzsystem weiter einen Drucksensor 23 auf, der vorzugsweise in einer Stirnfläche des im allgemeinen zylinderförmigen Druckspeichers 17 angeordnet ist. Dieser Drucksensor 23 dient zum Erfassen des augenblicklich im Druckspeicher 17 herrschenden Druckes, auf dessen Grundlage die Steuereinheit 19 dann entsprechend den gewünschten Betriebsbedingungen der Brennkraftmaschine die Druckregelung über das Druckregelventil 16 vornimmt. Der Drucksensor 23 stellt deshalb auch einen wesentlichen Bestandteil des Druckregelkreises im Kraftstoffeinspritzsystem dar und muß in seiner Funktion genau überwacht werden, um von einem Defekt des Drucksensors ausgelöste Fehler bei der Druckeinstellung im Druckspeicher 17, die das Verbrennungsverhalten in der Brennkraftmaschine beeinflussen, zu verhindern. Eine direkte Funktionsüberwachung des Drucksensors 23 mittels einer im Drucksensor integrierten Funktionsüberwachungseinheit, die mit Aufnehmern zur Datenerfassung im Drucksensor bestückt ist, ist zwar möglich, hat jedoch hohe Herstellungskosten des Drucksensors zur Folge. Weiterhin muß eine solche im Drucksensor integrierte Funktionsüberwachungseinheit auch an die speziellen Gegebenheiten der Brennkraftmaschine angepaßt werden. Gemäß der Erfindung kann jedoch auf eine solche direkte Funktionsüberwachungseinheit mit zusätzlichen Meßwertaufnehmern verzichtet werden.

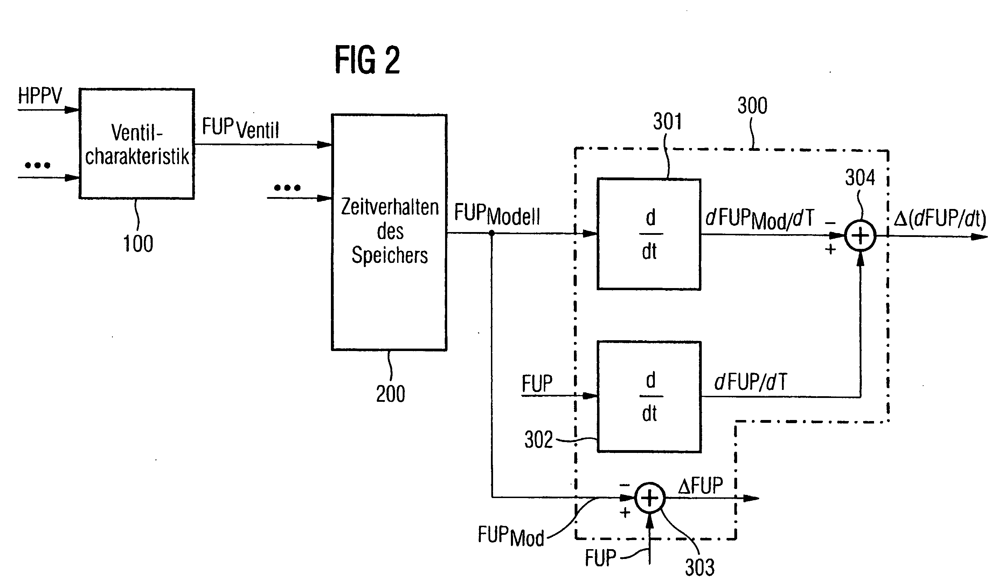

Eine erfindungsgemäße Funktionsüberwachungseinheit für einen Drucksensor, die in einem Kraftstoffeinspritzsystem gemäß Figur 1 eingesetzt wird, ist in Figur 2 in seinem Grundaufbau gezeigt. Diese Funktionsüberwachungseinheit weist eine Druckstellglied-Bewertungseinheit 100 auf, die anhand des Tastverhältnisses HPPV des pulsweiten-modulierten Ansteuersignals für das Druckregelventil 16 den gegenwärtigen Haltedruck $FUP_{Ventil}$ des Druckregelventils in seinem Absolutwert und seinem Zeitverhalten berechnet. Gemäß einer vorteilhaften Ausführungsform kann diese Druckstellglied-Bewertungseinheit 100 weiterhin bei der Berechnung des Haltedrucks $FUP_{Ventil}$ ein Temperaturverhalten des Druckregelventils sowie die Abhängigkeit der Ventilcharakteristik von einer Drehzahl der Brennkraftmaschine berücksichtigen.

Die Druckstellglied-Bewertungseinheit 100 legt den berechneten Haltedruck $FUP_{Ventil}$ an einer Speicherdruck-Bewertungseinheit 200 an, die daraus den gegenwärtig im Druckspeicher 17 herrschenden Druck berechnet. Bei dieser Druckberechnung berücksichtigt die Speicherdruck-Bewertungseinheit 200 die aktuelle Massenbilanz des Kraftstoffs im Druckspeicher 17, die sich aus den von der Steuereinheit 19 erfaßten Meßdaten ermitteln läßt. Bei der Berechnung der Massenbilanz des Kraftstoffs im Druckspeicher 17 wird folgendes einfaches Modell zugrundegelegt:

Eine positive Massenbilanz im Druckspeicher zeigt an, daß der Kraftstoff komprimiert wird und der Druck im Druckspeicher steigt. Bei einer negativen Massenbilanz dagegen verringert sich der im Druckspeicher vorhandene Kraftstoff, wobei der Druck im Druckspeicher sinkt. Die zeitliche Änderung der im Druckspeicher gespeicherten Kraftstoffmenge $\dot{m}_s$ und damit die zeitliche Änderung des Drucks im Druckspeicher wird durch die in den Druckspeicher eingespeisten und aus ihm abgelassenen Kraftstoffströme bestimmt. Der aus dem Druckspeicher 17 abgegebene Kraftstoffmassenstrom $\dot{m}_{out}$ setzt sich dabei aus dem über die Einspritzventile 18 in die Brennkraftmaschine eingespritzten Einspritz-Massenstrom $\dot{m}_i$, aus dem über die Einspritzventile 18 abgegebenen Leckage-Massenstrom $\dot{m}_l$ und aus dem aus über das Druckregelventil 16 abgeführten Ventil-Massenstrom $\dot{m}_v$ zusammen. Der in den Druckspeicher 17 eingespeiste Kraftstoffmassenstrom $\dot{m}_{in}$ wird durch den Förder-Massenstrom $\dot{m}_p$ der Hochdruckpumpe 15 bestimmt. Es gelten somit folgende Gleichungen:

$$\dot{m}_s = \dot{m}_{in} - \dot{m}_{out} \qquad (1)$$

mit

$$\dot{m}_{in} = \dot{m}_p \qquad (2)$$

$$\dot{m}_{out} = \dot{m}_i + \dot{m}_l + \dot{m}_v \qquad (3)$$

Der Förder-Massenstrom $\dot{m}_p$ wird dabei durch das Ansteuersignal der Steuereinheit 19 für die Hochdruckpumpe 15 bzw. das Saugdrosselventil 14 festgelegt. Für den Einspritz-Massenstrom $\dot{m}_i$ gilt weiter

$$\dot{m}_i = N \times m_i \qquad (4),$$

wobei N der Drehzahl der Brennkraftmaschine und $m_i$ der Einspritzmasse pro Zylinder der Brennkraftmaschine entspricht. Der Leckage-Massenstrom $\dot{m}_l$ ist spezifisch für die verwendeten Einspritzventile 18.

Der vom Druckregelventil 16 abgeführte Ventil-Massenstrom $\dot{m}_v$ wird vom jeweiligen Betriebszustand der Brennkraftmaschine bestimmt. Während einer Druckabbauphase im Druckspeicher, z.B. wenn die Brennkraftmaschine abgestellt wird, ist das Druckregelventil 16 vollständig geöffnet, so daß der Ventil-Massenstrom $\dot{m}_v$ den aus dem Druckspeicher 17 abgelassenen Kraftstoffmassenstrom $\dot{m}_{out}$ bestimmt. In diesem Fall sind der Einspritz-Massenstrom $\dot{m}_i$ und der Leckage-Massenstrom $\dot{m}_l$ vernachlässigbar und der aus dem Druckspeicher 17 abgelassene Kraftstoffmassenstrom $\dot{m}_{out}$ wird ausschließlich durch den vom Strömungsquerschnitt des Druckregelventils vorgegebenen Ventil-Massenstrom $\dot{m}_v$ festgelegt.

Im Falle einer Druckaufbauphase im Druckspeicher 17, wie sie vorliegt, wenn die Brennkraftmaschine angelassen oder eine schnelle Drehzahlerhöhung durchgeführt wird, ist das Druckregelventil 16 vollständig verschlossen und der Ventil-Massenstrom $\dot{m}_v$ kann null gesetzt werden.

Wenn sich das Einspritzsystem dagegen in einem stabilen Betriebszustand befindet, also nicht in der Druckaufbau- bzw. Abbauphase, entspricht der in den Druckspeicher 17 eingespeiste Kraftstoffmassenstrom $\dot{m}_{in}$ dem aus dem Druckspeicher abgegebenen Kraftstoffmasssenstrom $\dot{m}_{out}$, so daß die Gesamtbilanz null ist.

Für den Druck im Druckspeicher $p_s$ ergibt sich unter Annahme eines konstanten Volumens $V_s$ für den Druckspeicher folgender Zusammenhang

$$p_s = K\left(1 - \frac{\rho_0}{\rho_s}\right) + p_0 \qquad (5)$$

wobei K dem Kompressionsmodul, $p_0$ dem Normaldruck, $\rho_0$ der Kraftstoffdichte im Normalzustand und $\rho_s$ der Kraftstoffdichte für den augenblicklich herrschenden Speicherdruck $\rho_s$ entspricht. Für die Kraftstoffdichte $\rho_s$ gilt weiter folgender Zusammenhang:

$$\rho_s = \int \dot{m}_s / v_s \, dt \qquad (6)$$

Setzt man Gleichung (6) in Gleichung (5) ein, so erhält man für den Speicherdruck

$$p_s = K(1 - \frac{\rho_0}{\int \dot{m}_s / V_s}) + p_0 \qquad (7)$$

Die Speicherdruck-Bewertungseinheit 200 kann also mittels Gleichung (7) unter Berücksichtigung von Gleichung (1) in einfacher Weise den augenblicklich herrschenden Druck im Druckspeicher 17 bestimmen. Besonders geeignete Betriebszustände der Brennkraftmaschine sind hierbei einerseits der stabile Betriebspunkt, bei dem die Massenbilanz null ist sowie die Druckaufbauphase, in der kein Kraftstoff über das Druckregelventil 16 abgesteuert wird und somit der Ventil-Massenstrom $\dot{m}_v$ null gesetzt werden kann.

Der von der Speicherdruck-Bewertungseinheit 200 berechnete augenblickliche Druck im Druckspeicher 17, der in Figur 2 mit $FUF_{Modell}$ gekennzeichnet ist, wird einer Vergleichseinheit 300 zugeführt, an der gleichzeitig der vom Drucksensor 23 erfaßte Druck FUP anliegt. Die Vergleichseinheit 300 weist eine Modelldruck-Berechnungseinheit 301 und eine Sensordruck-Berechnungseinheit 302 auf, die jeweils den Gradienten aus dem anliegenden Modelldruck $FUP_{Modell}$ und dem gemessenen Sensordruck FUP bestimmen. Diese berechneten Gradienten werden einer Gradientendifferenzeinheit 304 zugeführt, die eine Differenz zwischen diesen Gradienten berechnet. Weiterhin weist die Vergleichseinheit 300 eine Absolutwertdifferenzeinheit 303 auf, die die Differenz zwischen dem gemessenen Druck FUP und dem berechneten Modelldruck $FUP_{Modell}$ ermittelt. Die von der Gradientendifferenzeinheit 304 ermittelte Gradientendifferenz und die von der Absolutwertdifferenzeinheit 303 bestimmte Absolutwertdifferenz werden mit vorgegebenen Wertebereichen korreliert. Wird festgestellt, daß eine der beiden Kenngrößen oder beide Kenngrößen außerhalb der jeweils vorgegebenen Wertebereiche liegen, so erzeugt die Vergleichseinheit 300 ein Fehlersignal, das der Steuereinheit 19 anzeigt, daß ein Schaden im Drucksensor 23 des Druckspeichers 17 aufgetreten ist. Die Steuereinheit 19 kann daraufhin zum Beispiel dem Bediener der Brennkraftmaschine anzeigen, daß umgehend ein Auswechseln des Drucksensors vorgenommen werden muß.

Gemäß der Erfindung läßt sich also auf einfache Weise die Funktionsfähigkeit des Drucksensors 23 aufgrund der bereits standardmäßig im Einspritzsystem erfaßten Meßdaten mit Hilfe einer einfachen Modellberechnung überprüfen. Es sind also keine zusätzlichen Meßwertaufnehmer erforderlich. Weiterhin läßt sich das erfindungsgemäße Funktionsüberwachungssystem auch einfach an die jeweiligen Gegebenheiten in der Brennkraftmaschine anpassen.

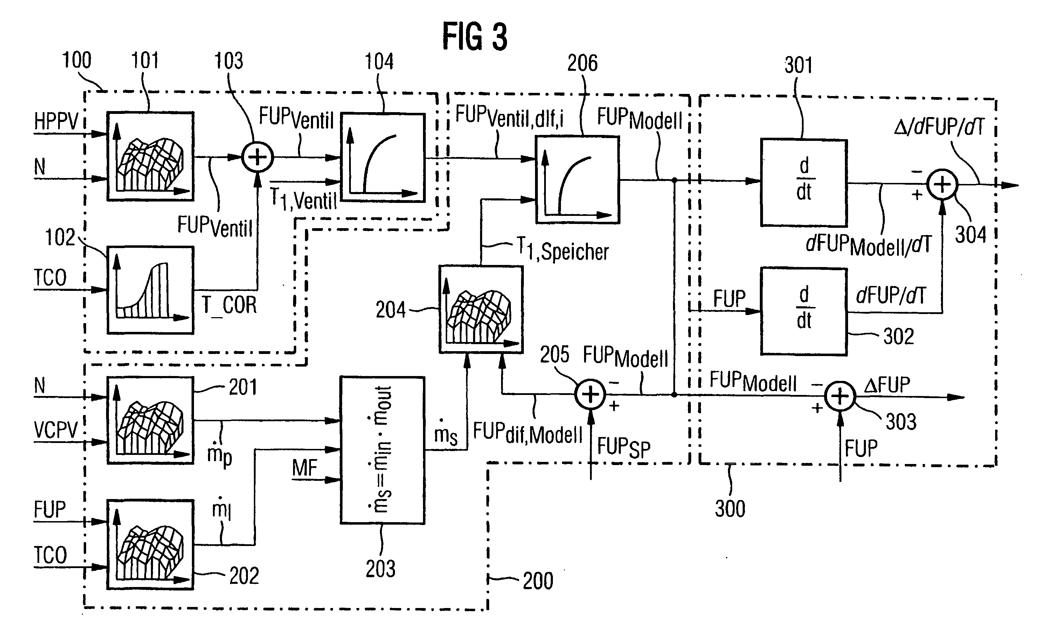

Figur 3 zeigt eine mögliche Ausführungsform des in Figur 2 gezeigten Grundaufbaus des erfindungsgemäßen Funktionsüberwachungssystems. Die Funktionsüberwachung wird hierbei während der Druckaufbauphase im Einspritzsystem, wenn das Druckregelventil 16 vollständig geschlossen ist, ausgeführt. Der Ventilmassenstrom $\dot{m}_v$ kann somit null gesetzt werden.

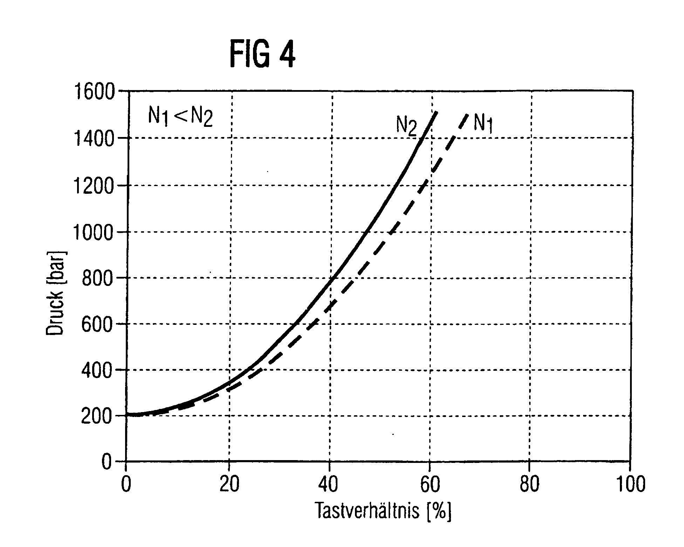

Gemäß Figur 3 weist die Druckstellglied-Bewertungseinheit 100 eine Haltedruck-Abbildungseinheit 101 auf, an der das Tastverhältnis HPPV des Ansteuersignals für das Druckregelventil 16 und die aktuelle Drehzahl N der Brennkraftmaschine anliegen. Aus diesen beiden Werten ermittelt die Haltedruck-Abbildungseinheit 101 mit Hilfe eines gespeicherten Kennfeldes den aktuellen Haltedruck $FUP_{Ventil}$ des Druckregelventils. Figur 4 zeigt Kennlinien des Haltedrucks eines Druckregelventils, aufgetragen gegen ein Tastverhältnis des pulsweiten-modulierten Ansteuersignals des Druckregelventils für zwei unterschiedliche Drehzahlen $N_1$ und $N_2$ der Brennkraftmaschine. Diese Kennlinien liegen dem in der Haltedruck-Abbildungseinheit 101 verwendeten Kennlinienfeld zugrunde.

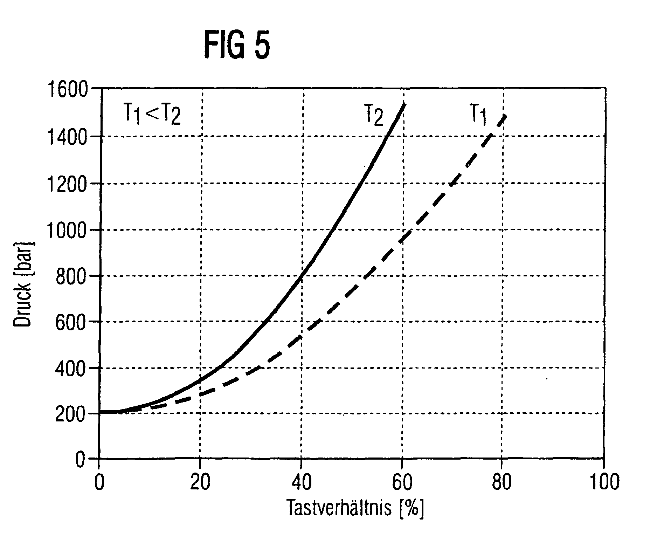

Die Druckstellglied-Bewertungseinheit 100 weist weiterhin eine Temperatur-Abbildungseinheit 102 auf, an der die in der Brennkraftmaschine ermittelte Kühlmitteltemperatur anliegt. Die Temperatur-Abbildungseinheit 102 berechnet anhand einer eingespeicherten Kennlinie aus der Kühlmitteltemperatur einen Korrekturfaktor T-COR, um den Temperaturgang des Druckregelventils, wie er in Figur 5 für zwei unterschiedliche Temperaturen $T_1$ und $T_2$ gezeigt ist, zu kompensieren. Eine Kompensiereinheit 103 multipliziert diesen Korrekturfaktor T-COR mit dem von der Haltedruck-Abbildungseinheit 101 ermittelten Haltedruck $FUP_{Ventil}$, um einen temperaturkompensierten Wert zu ermitteln.

Dieser kompensierte Haltedruck wird einem diskreten Verzögerungsglied erster Ordnung 104 zugeführt, der das Zeitverhalten des Stellgliedes im Druckregelventil 16 moduliert. Die Berechnungsvorschrift für dieses Verzögerungsglied läßt sich durch folgende Gleichung ausdrücken:

$$FUP_{Ventil,dft,i} = \frac{1}{T_{1,Ventil}/T_a + 1}\left( \frac{T_{1,Ventil}}{T_a} FUP_{Ventil,dft,i-1} + FUP_{Ventil,i} \right) \quad (8)$$

Die Zeitkonstante $T_1$, ventil des Verzögerungsgliedes ist spezifisch für das verwendete Druckregelventil und liegt in der Größenordnung von 10 ms. Die Abtastzeit wird durch die Zeit zwischen zwei Verbrennungsvorgängen im Zylinder der Brennkraftmaschine bestimmt und beträgt beispielsweise 5 ms.

Der von dem Verzögerungsglied erster Ordnung 104 der Druckstellglied-Bewertungseinheit 100 bestimmte aktuelle verzögerte Ventilhaltedruck wird einem in der Speicherdruck-Bewertungseinheit 200 enthaltenen weiteren Verzögerungsglied erster Ordnung 206 zugeführt, dessen Berechnungsvorschrift

$$FUP_{Speicher,j} = \frac{1}{T_{1,Speicher}/Ta + 1}\left(\frac{T_{1,Speicher}}{Ta}FUP_{Speicher,j-1} + FUP_{Ventil,Aft,i}\right) \quad (9)$$

lautet.

Die Zeitkonstante $T_1$, Speicher wird dabei durch die Funktionseinheiten 201 bis 205 der Speicherdruck-Bewertungseinheit 200 vorgegeben. An der Pumpenförderstrom-Abbildungseinheit 201 liegt hierbei die aktuelle Drehzahl N der Brennkraftmaschine sowie das Ansteuersignal VCPV der Hochdruckpumpe 15 bzw. des Saugdrosselventils 14 an. Die Pumpenförderstrom-Abbildungseinheit 201 berechnet daraus mit Hilfe eines gespeicherten Kennlinienfelds den Förder-Massenstrom $\dot{m}_p$ der Hochdruckpumpe 15. Gleichzeitig bestimmt die Leckage-Abbildungseinheit 202 aus dem aktuell im Druckspeicher 17 herrschenden Druck FUP sowie der Kühlmitteltemperatur TCO mit Hilfe eines eingespeicherten Kennlinienfeldes den Leckage-Massenstrom $\dot{m}_l$. Die Förderstrom-Abbildungseinheit 201 und die Leckage-Abbildungseinheit 202 führen die berechneten Werte einer Berechnungseinheit 203 zu, an der gleichzeitig der Wert der aktuellen Einspritzmenge MF anliegt. Die Berechnungseinheit 203 berechnet aus diesen Werten für den Betriebszustand Druckaufbau, in dem der Ventil-Massenstrom $\dot{m}_V$ null gesetzt werden kann, die Massenbilanz $\dot{m}_s$. Diese berechnete Massenbilanz $\dot{m}_s$ wird in einer Zeitkonstanten-Berechnungseinheit 205 mit einem Differenzmodelldruck $FUP_{dif,\,Modell}$, der in der Differenzeinheit 205 aus dem Modelldruck FUP und einem Solldruck $FUP_{SP}$ berechnet wird, in einem Kennfeld korreliert, um die Zeitkonstante $T_{1,\,Speicher}$ zu bestimmen. Diese Zeitkonstante $T_1$, Speicher beträgt im Betriebszustand-Druckaufbau ca. 100 ms, im Betriebszustand-Druckabbau dagegen ca. 20 ms. Die Kennfelddaten, die in den Funktionseinheiten 101, 102, 201, 202 und 204 verwendet werden, können über Simulationsrechnung unter Zugrundelegung der oben angegebenen Gleichungen bestimmt oder auch auf dem Versuchsweg ermittelt werden.

Der vom Verzögerungsglied erster Ordnung 206 bestimmte Modelldruck $FUP_{Modell}$ wird in der Vergleichseinheit 300 analog dem in Figur 2 dargestellten Ausführungsbeispiel mit dem vom Drucksensor 17 gemessenen Druckwert korreliert, wobei die ermittelten Kenngrößen Gradientendifferenz und Absolutwertdifferenz zur Diagnose der Funktionsfähigkeit des Drucksensors 23 ausgewertet werden.

**Patentansprüche**

1.  Verfahren zur Funktionsüberwachung eines Drucksensors, der den Druck in einem über ein Druckstellglied geregelten Druckspeicher aufnimmt, mit den Verfahrensschritten:

    Berechnen des zu erwartenden Druckwertes in dem Druckspeicher für einen bestimmten Zeitpunkt auf der Grundlage des beim Druckstellglied voreingestellten Haltedrucks und der erfaßten Änderungsrate in der Massenbilanz eines in dem Druckspeicher enthaltenen Mediums; und
    Vergleichen des für den bestimmten Zeitpunkt berechneten Druckwertes mit dem vom Drucksensor zu dem bestimmten Zeitpunkt aufgenommenen Druckwert, um bei einer Abweichung über eine vorbestimmte Differenz hinaus einen Funktionsfehler im Drucksensor festzustellen.

2.  Verfahren gemäß Anspruch 1 mit den weiteren Verfahrensschritten:

    Berechnen eines Gradienten des zu dem bestimmten Zeitpunkt zu erwartenden Druckwertes;
    Berechnen eines Gradienten des von dem Drucksensor aufgenommenen Druckwertes; und
    Vergleichen der berechneten Gradienten, um bei einer Abweichung über eine vorbestimmte Differenz hinaus einen Funktionsfehler im Drucksensor festzustellen.

3.  Verfahren gemäß Anspruch 1 oder 2, wobei der beim Druckstellglied zu dem bestimmten Zeitpunkt voreingestellte Haltedruck im Druckspeicher aus einem Ansteuerwert des Druckstellgliedes, verzögert um eine vorgegebene Zeitkonstante, berechnet wird.

**4.** Verfahren gemäß Anspruch 3 zum Einsatz in einer Brennkraftmaschine, wobei der Haltedruck des Druckstellgliedes aus dem Ansteuerwert des Druckstellgliedes in Abhängigkeit von einer Drehzahl der Brennkraftmaschine und/oder einer Kühltemperatur der Brennkraftmaschine bestimmt wird.

**5.** Verfahren gemäß einem der Ansprüche 1 bis 4 zum Einsatz in einer Brennkraftmaschine, wobei die Funktionsüberwachung des Drucksensors in einem Druckaufbau-Betriebszustand der Brennkraftmaschine bei geschlossenem Druckstellglied durchgeführt wird und die Änderungsrate in der Massenbilanz des in dem Druckspeicher enthaltenen Mediums zu dem bestimmten Zeitpunkt aus einem Einspritz-Massenstrom in die Brennkraftmaschine, einem Leckage-Massenstrom von Einspritzventilen der Brennkraftmaschine und einem dem Druckspeicher zugeführten Förder-Massenstrom berechnet wird.

**6.** Vorrichtung zur Funktionsüberwachung eines Drucksensors (23), der den Druck in einem über ein Druckstellglied (16) geregelten Druckspeicher (17) aufnimmt, mit

einer Speicherdruck-Bewertungseinheit (200) zum Berechnen des zu erwartenden Druckwertes in dem Druckspeicher für einen bestimmten Zeitpunkt auf der Grundlage des beim Druckstellglied voreingestellten Haltedrucks und der erfaßten Änderungsrate in der Massenbilanz eines in dem Druckspeicher enthaltenen Mediums; und
einer Vergleichseinheit (300) zum Vergleichen des für den bestimmten Zeitpunkt berechneten Druckwertes mit dem vom Drucksensor aufgenommenen Druckwert zu dem bestimmten Zeitpunkt, um bei einer Abweichung über eine vorbestimmte Differenz hinaus einen Funktionsfehler im Drucksensor festzustellen.

**7.** Vorrichtung gemäß Anspruch 6, wobei die Vergleichseinheit (300)

eine Modelldruck-Berechnungseinheit (301) zum Berechnen eines Gradienten des zu dem bestimmten Zeitpunkt zu erwartenden Druckwertes;
eine Sensordruck-Berechnungseinheit (302) zum Berechnen eines Gradienten des von dem Drucksensor (23) aufgenommenen Druckwertes; und
eine Gradientendifferenzeinheit (304) zum Berechnen einer Differenz zwischen den berechneten Gradienten, um bei einer Abweichung über eine vorbestimmte Differenz hinaus einen Funktionsfehler im Drucksensor festzustellen

aufweist.

**8.** Vorrichtung gemäß Anspruch 6 oder 7, mit einer Druckstellglied-Bewertungseinheit (100), die ein Verzögerungsglied erster Ordnung (104) zum Berechnen des beim Druckstellglied (16) voreingestellten Haltedrucks aus einem Ansteuerwert des Druckstellgliedes, verzögert um eine vorgegebene Zeitkonstante, aufweist.

**9.** Vorrichtung gemäß Anspruch 8 zum Einsatz in einer Brennkraftmaschine, wobei die Druckstellglied-Bewertungseinheit (100)

eine Haltedruck-Abbildungseinheit (101) zum Berechnen des beim Druckstellglied (16) voreingestellten Haltedrucks aus dem Ansteuerwert des Druckstellgliedes in Abhängigkeit von einer Drehzahl der Brennkraftmaschine; und
eine Temperatur-Abbildungseinheit (102) zum Bestimmen eines Korrekturwertes des Haltedrucks entsprechend der Temperatur der Brennkraftmaschine

aufweist.

**10.** Vorrichtung gemäß einem der Ansprüche 6 bis 9 zum Einsatz in einer Brennkraftmaschine, wobei die Speicherdruck-Bewertungseinheit (200) ein Verzögerungsglied erster Ordnung (206) aufweist, das den zu erwartenden Druckwert in dem Druckspeicher (17) zu dem bestimmten Zeitpunkt auf der Grundlage des beim Druckstellglied (16) voreingestellten Haltedrucks, verzögert um eine Zeitkonstante, berechnet, wobei die Zeitkonstante in Abhängigkeit der erfaßten Änderungsrate in der Massenbilanz des in dem Druckspeicher enthaltenden Mediums zu dem bestimmten Zeitpunkt berechnet wird.

**Claims**

1. Method for monitoring the functioning of a pressure sensor that measures the pressure in a pressure accumulator controlled by a pressure setting element, with the following steps:

   Calculation of the pressure to be expected in the pressure accumulator for a specific time point on the basis of the holding pressure preset at the pressure setting element and of the measured rate of change detected in the balance of masses of a medium contained in the pressure accumulator, and

   comparing the pressure calculated for the specific time point with the value measured by the pressure sensor at the specific time point in order to detect a functional fault in the pressure sensor if there is a deviation greater than a preset difference.

2. Method according to Claim 1 with the following further steps:

   Calculation of a gradient of the pressure to be expected at the specific time point;

   Calculation of a gradient of the pressure measured by the pressure sensor; and

   comparison of the calculated gradients in order to detect a functional fault in the pressure sensor if there is a deviation greater than a preset difference.

3. Method according to Claims 1 or 2, with the holding pressure in the pressure accumulator preset at the pressure setting element at a specific time point being calculated from a control value of the pressure setting element, delayed by a preset time constant.

4. Method according to Claim 3 for use in an internal combustion engine, with the holding pressure of the pressure setting element being determined from the control value of the pressure setting element relative to a speed of the internal combustion engine and/or of a coolant temperature of the internal combustion engine.

5. Method according to one of Claims 1 to 4 for use in an internal combustion engine, with the monitoring of the functioning of the pressure sensor being carried out in a pressure build-up operating state of the internal combustion engine with the pressure setting element closed and the rate of change in the balance of masses of the medium contained in the pressure accumulator being calculated at the specific time point from an injection mass rate of flow to the internal combustion engine, from a leakage mass rate of flow from the injection valves of the internal combustion engine and from the delivery mass rate of flow supplied to the pressure accumulator.

6. Device for monitoring the functioning of a pressure sensor (23) that measures the pressure in a pressure accumulator (17) controlled via a pressure setting element (16), with

   an accumulator pressure evaluation unit (200) for calculation of the pressure to be expected in the pressure accumulator for a specific time point on the basis of the holding pressure preset in the pressure setting element and the measured rate of change in the balance of masses of a medium contained in the pressure accumulator, and

   a comparison unit (300) for comparing the pressure calculated for the specific time point with the pressure measured by the pressure sensor at the specific time point, in order to detect a functional fault in the pressure sensor if there is a deviation greater than a preset difference.

7. Device according to Claim 6, with the comparison unit (300)

   having a model pressure calculation unit (301) for calculation of a gradient of the pressure to be expected at the specific time point,

   a sensor pressure calculation unit (302) for calculation of a gradient of the pressure measured by the pressure sensor (23) and

   a gradient differential unit (304) for calculation of a difference between the calculated gradients, in order to detect a functional fault in the pressure sensor if there is a deviation greater than a preset difference.

8. Device according to Claim 6 or 7, with a pressure setting element evaluation unit (100) that has a delay element of the first order (104) for calculating the holding pressure preset in the pressure setting element (16) from a control value of the pressure setting element, delayed by a preset time constant.

9. Device according to Claim 8, for use in an internal combustion engine with the pressure setting element evaluation unit (100)

    having a holding pressure map unit (101) for calculation of the holding pressure preset in the pressure setting element (16) from the control value of the pressure setting element relative to a speed of the internal combustion engine and
    a temperature map unit (102) for determining a correction value of the holding pressure corresponding to the temperature of the internal combustion engine.

10. Device according to one of Claims 6 to 9 for use in an internal combustion engine, with the accumulator pressure evaluation unit (200) having a delay element of the first order (206) that calculates the pressure to be expected in the pressure accumulator (17) at the specific time point on the basis of the holding pressure preset in the pressure setting element (16), delayed by a time constant, with the time constant being calculated relative to the measured rate of change in the balance of masses of the medium contained in the pressure accumulator at the specific time point.

**Revendications**

1. Procédé pour la surveillance d'un capteur de pression qui détecte la pression intérieure d'un accumulateur de pression régulé au moyen d'un organe de réglage de la pression, comprenant les phases de procédé suivantes :

    calcul de la valeur de pression qu'on doit attendre dans l'accumulateur de pression pour un instant déterminé sur la base de la pression de maintien préalablement réglée dans l'organe de réglage de la pression, et du taux de variation détecté dans le bilan de masse d'un milieu contenu dans l'accumulateur de pression ; et
    comparaison de la valeur de pression calculée pour l'instant prédéterminé avec la valeur de pression captée par le capteur de pression à l'instant déterminé, pour constater un défaut de fonctionnement dans le capteur de pression en présence d'un écart qui excède une différence prédéterminée.

2. Procédé selon la revendication 1, comprenant les phases de procédé additionnel suivant :

    calcul d'un gradient de la valeur de pression qu'on doit attendre à l'instant déterminé ;
    calcul d'un gradient de la valeur de pression détectée par le capteur de pression ; et
    comparaison des gradients calculés, pour constater un défaut de fonctionnement dans le capteur de pression en présence d'un écart qui excède une différence prédéterminée.

3. Procédé selon la revendication 1 ou 2, dans lequel la pression de maintien régnant dans l'accumulateur de pression qui a été préalablement réglée par l'organe de réglage de la pression à l'instant déterminé est calculée à partir d'une valeur de pilotage de l'organe de réglage de la pression retardée d'une constante de temps prédéterminée.

4. Procédé selon la revendication 3, destiné à être appliqué dans un moteur à combustion interne, dans lequel la pression de maintien de l'organe de réglage de la pression est déterminée à partir de la valeur de pilotage de l'organe de réglage de la pression en fonction d'une vitesse de rotation du moteur à combustion interne et/ou d'une température de refroidissement du moteur à combustion interne.

5. Procédé selon une des revendications 1 à 4, destiné à être appliqué dans un moteur à combustion interne, dans lequel la surveillance du fonctionnement du capteur de pression est exécutée dans un état de fonctionnement du moteur à combustion interne comportant une croissance de la pression, alors que l'organe de réglage de la pression est fermé, et le taux de variation du bilan massique du milieu contenu dans l'accumulateur de pression est calculé à l'instant déterminé à partir d'un débit massique d'injection dans le moteur à combustion interne, d'un débit massique de fuite des injecteurs du moteur à combustion interne et d'un débit massique de refoulement envoyé à l'accumulateur de pression.

**6.** Dispositif pour la surveillance du fonctionnement d'un capteur de pression (23) qui reçoit la pression intérieure d'un accumulateur de pression (17) régulé au moyen d'un organe de réglage de la pression (16), comprenant,

une unité (200 ) d'évaluation de la pression de l'accumulateur destinée à calculer la valeur de pression dans l'accumulateur de pression qu'on doit attendre pour un instant donné sur la base de la pression de maintien préalablement réglée dans l'organe de réglage de la pression et du taux de variation détecté dans le bilan massique d'un milieu contenu dans l'accumulateur de pression ; et
une unité (300) de comparaison destinée à comparer la valeur de pression calculée pour l'instant donné à la valeur de pression captée par le capteur de pression à l'instant déterminé, pour détecter un défaut de fonctionnement dans le capteur de pression en présence d'un écart qui excède une différence prédéterminée.

**7.** Dispositif selon la revendication 6, dans lequel l'unité (300) de comparaison

comprend une unité (301) de calcul de la pression modèle destinée à calculer un gradient de la valeur de pression qu'on doit attendre à un instant déterminé ;
une unité (302) de calcul de la pression du capteur destinée à calculer un gradient de la valeur de pression captée par le capteur de pression (23) et ;
une unité (304) de différence de gradient destinée à calculer une différence entre les gradients calculés pour constater un défaut de fonctionnement dans le capteur de pression en présence d'un écart qui excède une différence prédéterminée.

**8.** Dispositif selon la revendication 6 ou 7, comprenant une unité (100) d'évaluation de l'organe de réglage de la pression, qui présente un organe à retard de premier ordre (104) destiné à calculer la pression de maintien préalablement réglée sur l'organe (16) de réglage de la pression, en partant d'une valeur de pilotage de l'organe de réglage de la pression, retardée d'une constante de temps prédéterminée.

**9.** Dispositif selon la revendication 8, destiné à être utilisé dans un moteur à combustion interne dans lequel l'unité (100) d'évaluation de l'organe de réglage de la pression comprend

une unité (101) de présentation de la pression de maintien destinée à calculer la pression de maintien préalablement réglée sur l'organe (16) de réglage de la pression, sur la base de la valeur de pilotage de l'organe de réglage de la pression en fonction d'une vitesse de rotation du moteur à combustion interne ; et
une unité (102) de présentation de la température destinée à déterminer un coefficient de correction de la pression de maintien en fonction de la température du moteur à combustion interne.

**10.** Dispositif selon une des revendications 6 à 9, destiné à être utilisé dans un moteur à combustion interne, dans lequel l'unité (200) d'évaluation de la pression de l'accumulateur comprend un organe à retard de premier ordre (206) qui calcule la valeur de la pression intérieure de l'accumulateur de pression (17) qu'on doit attendre à l'instant déterminé sur la base de la pression de maintien préalablement réglée dans l'organe (16) de réglage de la pression, retardée d'une constante de temps, la constante de temps étant calculée en fonction du taux de variation détecté dans le bilan massique du milieu contenu dans l'accumulateur de pression à l'instant donné.

## FIG 1

## FIG 2

HPPV →

Ventil-charakteristik

100

$FUP_{Ventil}$ →

Zeitverhalten des Speichers

200

$FUP_{Modell}$

301

$\dfrac{d}{dt}$

$dFUP_{Mod}/dT$

304

$\Delta(dFUP/dt)$

300

FUP →

302

$\dfrac{d}{dt}$

$dFUP/dT$

$FUP_{Mod}$

303

FUP

$\Delta FUP$

EP 0 975 942 B1

## FIG 3

EP 0 975 942 B1

# FIG 4

# FIG 5